(19) Europäisches Patentamt / European Patent Office / Office européen des brevets

(11) **EP 4 462 097 A1**

(12) **EUROPEAN PATENT APPLICATION**

(43) Date of publication:
**13.11.2024 Bulletin 2024/46**

(21) Application number: **24171539.0**

(22) Date of filing: **22.04.2024**

(51) International Patent Classification (IPC):
*G01M 99/00* *(2011.01)*

(52) Cooperative Patent Classification (CPC):
**G01M 99/002**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.05.2023 IT 202300009348**

(71) Applicant: **Air Control S.r.l.**
**21040 Jerago con Orago (VA) (IT)**

(72) Inventor: **CROSTA, Paolo**
**21040 JERAGO CON ORAGO (VA) (IT)**

(74) Representative: **Vatti, Francesco Paolo et al**
**Fumero S.r.l**
**Pettenkofferstrasse 20/22**
**80336 Munich (DE)**

(54) **PLANT FOR SIMULATING THE THERMAL MASS OF BUILDINGS IN SYSTEMS FOR TESTING THERMAL MACHINES**

(57) Plant for simulating the thermal behaviour of an inertial mass, characterized in that it is formed by a thermostatic isothermal chamber to which (hot or cold as required) thermal carriers generated by the thermal machine under test are brought.

Between the supply system of the isothermal chamber, which performs the test, and the unit under test, there is placed an inertial hydronic device, adjustable in volume and exchanged thermal power, so as to simulate the thermal behaviour of the inertial mass of a building.

EP 4 462 097 A1

## Description

The present invention relates to an adjustable plant for simulating the thermal mass of buildings, specifically for use in systems for testing chemical-cycle thermal machines, such as heat pumps.

The production of plants for air conditioning, heating or cooling of buildings, set up to have many varied functions, involves in most cases the presence of heating plants of notable size and bulk, for which it is necessary and appropriate, before installation, to assess their actual capacity to manage the desired temperatures, as a function of the climatic conditions, the materials and the orientation of the building in which the plant is intended to be installed.

This requirement impacts in particular constructors and owners of properties and apartment blocks, and has thus led in most cases to the development of test systems, i.e. simulators that provide the capability to prove the characteristics of the equipment intended to heat and cool buildings by the use of heat pumps.

The requirement for this type of test has finally been confirmed and a regulatory definition has been established in Directive 2010/31/EU of the European Parliament and of the Council of 19 May 2010 (which for simplicity will be referred to hereafter as "the Directive") on the energy performance of buildings. As it is structured, the Directive makes energy-saving practices even more cost-effective in the building sector, in particular by providing for the implementation of laboratory activities aimed at defining aspects of environmental protection, energy saving and equipment efficiency.

This has thus given rise to the creation of a complex of tests for measuring the performance of energy plants for buildings, based on objective, true and effective data, following which it is possible to draw up an energy report which can provide the consumer with reliable data on which to base their own choices .

To ensure sufficient impartiality and, above all, unambiguity of the data, the Directive has also established that the certification of the energy performance of buildings and of the inspection of heating and air conditioning plants be carried out by independent, qualified and/or accredited experts, whose independence must be guaranteed based on objective criteria, which can thus introduce an element of transparency on the property market, to the benefit of potential purchasers or users of property.

To meet these demands, both ethical and legal, entities for testing thermal machines have been created, specifically competent in testing thermal machines, for heating, cooling and production of domestic water. These entities have plants that simulate the operating conditions of thermal machines. In particular, these plants are formed by perfectly isolated test chambers in which calorimeters are provided which simulate, by means of appropriate computer applications and remote control of the plant itself, the environmental and climatic operating conditions in terms of temperature (positive or negative) and relative humidity.

Associated with these instruments are hydronic devices, i.e. a set of fluid stores, thermal systems, pumps, exchangers and measurement systems, by means of which loads and performance levels for the units under test can be simulated.

As is probably clear to a thermal engineering expert, the test is typically substantiated by the creation of a system of contrasting conditions, able to check whether the assumptions relating to the units under test, in terms of performance and power, are true and fair.

The calculation of the performance of air conditioning equipment is based on a digital processing of data collected, by means of qualified instrumentation, over the course of a test.

In order to make the assessments regarding the performance of a cooling plant uniform, a specific UNI (Italian Standards

Body) standard has been drawn up, for which it is appropriate to use the following formula:

$$P_c = q * \rho * c_p * \Delta t$$

where:

P$_C$ is the cooling capacity expressed in watts
q is the volume flow rate, expressed in m$^3$/s
$\rho$ is the density
c$_p$ is the specific heat at a constant pressure in J/(kg*K)
$\Delta t$ is the difference between the inlet and outlet temperatures expressed in Kelvin.

The plants available on the market, which are based on these guidelines, and which provide for developing the power levels required for the test, are as a rule limited only by the volumes of the stored fluid and by the electrical power derived from the grid; otherwise, each item of equipment can be simulated when used, according to the test methods established by the technical standards.

At present, it must be noted that, however refined and accurate the method for calculating the performance of an item of equipment can be, substantially abstracted extrapolations are involved, capable therefore of providing only a partial response of the actual overall energy balance in the equipment/building relationship, which energy balance is the object of the air conditioning function.

Indeed, at present, variables suitable for identifying the typology of the building under examination are not provided, and therefore it is not possible to assess the adaptability of the unit under test to the conditions presented by a building which evolve in relation to a heating or cooling process. In fact, a building is characterized by its own mass, with its own thermal inertia, which would be appropriate to consider in order to assess the performance and adaptability of the thermal generation equipment, thus considering the changing of the conditions.

A demand is therefore perceived, and it is an aim of the present invention, to produce a plant for simulating a thermal mass of a building, with contrasting conditions for a unit under test, which is capable of reducing the theoretical simulation level with the advantage of a more correct assessment, making the representation of the mass of the building vary over time.

In particular, an aim of the present invention is to produce a system for the overall thermal mass measurement of a building and for the measurement of the behaviour of the heat pumps according to changes in the environment which stress the building internally and externally.

Said aim is achieved by means of a plant for simulating the thermal behaviour of an inertial mass, which is formed by a thermostatic isothermal chamber to which the (hot or cold, as required) vapour generated by the thermal machine under test is brought, a hydronic inertial device adjustable in volume and exchanged thermal power being placed between said isothermal chamber and the unit under test.

Some other preferred characteristics, as defined by the secondary claims, can be associated with this solution.

The simulation device of the prior art is formed by a series of interconnected circuits, which are aimed at forming a structure similar to a hydronic plant in which only the values of stored fluid volumes are known, and by electrical power. The test calculations therefore take account only of calculations relating to the performance of an item of equipment, substantially abstracting the intrinsic performance of the machine, and in fact not considering the "building" system and the environment in which it is inserted.

The recent energy-saving requirements, due to the development of ESG practices even in the world of construction, and also due to the clear global instability, have highlighted on several occasions the need to consider the building in which the hydronic plant is installed.

The present inventors have therefore modified in essence their approach to studying the situation, considering the fact that the building is a dynamic entity, which therefore cannot be the subject of a theoretical and static simulation, but requires an assessment of the fluctuation of the energy balance over time, at defined conditions of temperature, radiation and humidity. By considering these variables, a simulation is also successfully obtained of the performance and adaptability of the thermal generation equipment to changing background conditions, so as to include fatigue, of the plant over time under variable conditions over a day and over the seasons.

To this end, the inventors have created a simulation plant formed by a thermostatic isothermal chamber to which the (hot or cold, as required) vapour generated by the thermal machine under test is brought, a hydronic inertial device adjustable in volume and exchanged thermal power being placed between the isothermal chamber and the unit under test. Sensors for measuring the environmental physical conditions and a test tubing for the diffusion of the air emitted by the thermal machine and subsequently treated by the hydronic inertial device are provided inside the isothermal chamber. Outside the chamber, in addition to the thermal machine and the hydronic inertial device, a control unit is provided, suitable for managing the correct operation of the entire plant, in particular modulating the values of the simulation device, and for receiving the information from the sensors provided inside the chamber.

The hydronic inertial device is made up of a storage unit heated by the fluid from the test circuit, a circulation system provided with a pump, flow rate regulating systems and a flowmeter, required to measure the performance of the unit under test.

A circuit is connected to the storage unit containing the process water, which circuit adjusts, by means of a pump/exchanger system, the thermal characteristics of the contents by means of a known source of heat entering the storage unit, resulting from the characteristics of temperature and flow rate of this exchange system connected to the storage unit.

The entire plant is constructed such that every single element is completely isolated, except for the machine under test: thus the environment is guaranteed to be thermostatic isothermal, and, consequently, the incoming heat generated by the test circuit is guaranteed to be completely transferred to the circuit of the unit under test.

The exchanger/pump circuit, connected to the storage unit, can be adjusted in flow rate and temperature such that the heat transferred to the fluid contained in the storage unit can be defined, and consequently, through exchange, the temperature of the fluid inside the storage unit can be reliably identified, according to a defined known value.

Similarly, the volume of fluid contained in the storage unit can vary in relation to the power that must be simulated. Control of the volume is managed by the measurement of the static pressure in the storage unit, provided by the instrument $\Delta P_{level}$ connected to the storage unit.

According to this parameter, the exchange surface area of the hydronic storage unit will be increased or decreased, due to the supply for the test.

The coefficients present in the formula for power, already illustrated, are fully expressed: $\Delta T_{storage}$ is known, the fluid characteristics are known, the volume is known, by means of $\Delta P_{level}$.

In order to exclude any thermal loss from the storage unit, the system is located inside a thermostatic isothermal environment: the storage unit that simulates the mass of buildings is completely isolated and the incoming heat generated by the test circuit is completely transferred to the circuit of the unit under test.

In operation, the building thermal mass simulator is interposed in a test circuit so as to be able to operate on the coil. The coil, heating the storage unit, generates a fluid at a known temperature.

From the moment that the system is in a thermostatic isothermal environment and without losses, the test device heats the fluid contained in the storage unit through exchange.

At this point, the testing of the unit under test is started, according to the conditions specified by the standard, and with the instrumentation present, the characteristics of the unit under test are provided.

By simulating the heating of the building, the level of the fluid in the storage unit is modified, consequently increasing or decreasing the temperature; the volume of the fluid in the storage unit is measured, obtaining the value from its static pressure, $\Delta P_{level}$. It is thus possible to define the adaptability of the system to the evolution of thermal variations which stress the building mass.

The method now used can understandably be used to simulate the evolutions of thermal loads of buildings, resulting from changes in external climatic conditions.

From the above description, it is understood that the environmental and climatic conditions of operation in terms of temperature (positive and negative) and relative humidity, required to assess the performance of thermal machines, for heating, cooling and production of domestic water, have been the subject of a simulation by means of a test chamber and calorimeters under established test conditions (as specified by the technical standards), by the generation of an intensity of contrasting conditions.

In fact, a device for simulating the building to which the heat pump is fitted is placed between the hydronic assembly and the heat pump, so that the physical characteristics of the water at the inlet of the test circuit can be modified by acting directly on a system of resistors.

This device allows the performance levels of the recipient to be obtained under the various environmental conditions that necessarily change the theoretical simulation.

In particular, the adjustable coil in the device allows, together with the change in the volume of the storage unit, the thermal variation $\Delta t_{storage}$ to be determined and, consequently, the power entering the storage system.

In addition, the thermostatic system which includes the equipment excludes any loss, with a complete transfer of power, ensuring absolute accuracy of the energy balance.

Thus, it is possible to produce a realistic assessment of the performance of equipment intended for heating and cooling buildings, by virtue of a device which is interposed in existing circuits of a test laboratory, and which is equipped with circuits and instrumentation to control the fluid volume, which allow the thermal mass of buildings to be simulated, using the thermal performance of the existing test circuit.

From the above it is understood that the measurement paradigm changes: the simulation equipment uses conventional devices and instrumentation, but uses data to assess the performance of the units under test on the basis of variable rather than static contrasting conditions, achieving much better performing and prompt, and therefore true, results, although the algorithms proposed by the current regulations are not changed.

It is therefore understood that the equipment is suitable for simulating the evolution of thermal loads presented by buildings, not only those which are known (such as, in Italy, the "Attestato di Prestazione Energetica" ("Energy Performance Certificate")), but also those resulting from changes in external climatic conditions.

The previously stated aim has therefore been achieved, i.e. a plant for simulating a thermal mass of a building, with contrasting conditions for a unit under test, which is capable of varying the representation of the building mass, thus ensuring a more consistent and truthful assessment of the performance of an air conditioning plant over time and with variations in temperature.

It is understood that the form of execution described here is merely intended to facilitate an understanding of the inventive scope of the invention, as defined in the appended claims. Changes to the above description are to be considered therefore as falling within the scope of protection of the present invention.

**Claims**

1. Plant for simulating the thermal behaviour of an inertial mass, **characterized in that** it consists of a thermostatic isothermal chamber to which the (hot or cold, as required) vapour generated by the thermal machine under test is brought, a hydronic inertial device adjustable in volume and in exchanged thermal power being placed between said isothermal chamber and the unit under test.

2. Plant for simulating the thermal behaviour of an inertial mass, according to Claim 1, **characterized in that** sensors for measuring the environmental physical conditions and a test tubing for the diffusion of the air emitted by the thermal machine and subsequently treated by the hydronic inertial device are provided inside the isothermal chamber.

3. Plant for simulating the thermal behaviour of an inertial mass according to either Claim 1 or Claim 2, **characterized in that** said hydronic inertial device is a hydronic device adjustable in volume and in thermal power, and suitable for being placed between the existing test circuit of a laboratory plant and a unit under test, said hydronic device being formed by a storage unit, heated by a fluid from said test circuit, a circulation system provided with a pump, systems for regulating the flow rate of said test circuit, and a flowmeter.

4. Plant for simulating the thermal behaviour of an inertial mass according to any one of the preceding claims, **characterized in that** connected to said storage unit is a pump/exchanger system, adjustable in flow rate and temperature and suitable for defining the heat transferred to the fluid contained in said storage unit and intended for the units subjected to the simulation.

5. Plant for simulating the thermal behaviour of an inertial mass according to any one of the preceding claims, **characterized in that** the volume of water contained in the storage unit varies in relation to the storage unit static pressure measurement, the volume difference determining the variation of the exchange surface area of the hydronic storage unit for supplying said test plant.

6. Plant for simulating the thermal behaviour of an inertial mass according to any one of the preceding claims, **characterized in that** every single element, except for said inertial mass, is completely isolated to maintain a thermostatic isothermal environment.

7. Method for simulating the thermal behaviour of an inertial mass, implemented on a plant having the characteristics of any one of Claims 1 to 6, **characterized in that** it comprises the following steps:

> - arranging a storage unit between a thermal machine and a test circuit, said storage unit being formed by a fluid tank wherein a coil is placed;
> - generating inside the coil a fluid at known temperature;
> - transferring the heat contained in the coil to the fluid inside the storage unit, by exchange in a thermostatic isothermal environment and without losses;
> - activating the test circuit and collecting data
> - automatically adjusting the fluid level in the storage unit depending on the dynamic conditions of the inertial mass being examined and the relative temperature variation;
> - instantaneously measuring the volume inside the storage unit and hence calculating the static pressure;
> - recording, on the unit under test, the adaptability of the system to the various thermal conditions considered over time and the various external climatic conditions.

Europäisches
Patentamt

European
Patent Office

Office européen
des brevets

# EUROPEAN SEARCH REPORT

Application Number

EP 24 17 1539

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 101 626 713 B1 (NAT UNIV HANBAT INDUSTRY [KR]) 1 June 2016 (2016-06-01) * the whole document * | 1-7 | INV. G01M99/00 |

-----

TECHNICAL FIELDS
SEARCHED      (IPC)

G01M

The present search report has been drawn up for all claims

| Place of search | Date of completion of the search | Examiner |
|---|---|---|
| The Hague | 8 August 2024 | Moscelli, Nicola |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.............................................................................................
& : member of the same patent family, corresponding
    document

EPO FORM 1503 03.82 (P04C01)

**EP 4 462 097 A1**

## ANNEX TO THE EUROPEAN SEARCH REPORT
## ON EUROPEAN PATENT APPLICATION NO.

EP 24 17 1539

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2024

| Patent document cited in search report | Publication date | Patent family member(s) | Publication date |
|---|---|---|---|
| KR 101626713 B1 | 01-06-2016 | NONE | |

EPO FORM P0459

For more details about this annex : see Official Journal of the European Patent Office, No. 12/82

7